# EUROPEAN PATENT APPLICATION

(11) **EP 1 645 387 A1**
(43) Date of publication of application: **12.04.2006**
(21) Application number: 04425762.4
(22) Date of filing: 11.10.2004
(51) Int. Cl.: B29C 44/34, B29C 33/10

(54) **System and method for gas suction in a mould for foaming**

(71) Applicant: Tecnocad Progetti Spa, 10135 Torino (IT)
(72) Inventor: Rosso, Jean-Marie, 10135 Torino (IT)
(74) Representative: Marchitelli, Mauro

(57) **Abstract**

A foaming mould (10) for producing foamed articles, comprising:
- a first and a second half-mould (12, 14) movable towards each other along a direction of opening/closing and provided with respective active surfaces (26, 28) defining at least one foaming region (36), and
- at least one conduit (20) for the suction of reaction gases formed in said foaming region (36),
- at least one sealing gasket (38) which, in a partially open position of the half-moulds (12, 14), forms a volume for the expansion of the reaction gases communicating with said suction conduit (20) and in gas tight fashion towards the exterior of the mould.

## Description

The present invention relates to a foaming mould for producing foamed articles and a method for gas suction in a foaming mould.

The invention was developed with particular regard to the production of foamed components for vehicle interiors, e.g. monolithic or two-part dashboards, add-on bands for dashboards, parking brake supports, add-on bands for door panels, armrests for door panels and for parking brake supports, etc. These components are constituted by a support element made of rigid plastic material with an aesthetic coating layer and a layer of foamed plastic material interposed between the coating layer and the support element.

The moulds used for the production of articles of this kind are formed by a first and by a second half-mould, movable relative to each other along a direction of opening/closing and provided with respective active surfaces defining at least one foaming region.

In moulds of this kind there is the problem of the collection and suction of the gases which are formed during the foaming reaction.

Solutions have already been proposed for the suction of the reaction gases directly inside the foaming mould. The documents US5466404 and US5110085 describe foaming moulds with a gas suction system that aspirates the gases inside the foaming chamber of the mould. However, in these solutions there is the problem of preventing the foam from entering the gas suction holes.

The object of the present invention is to provide a system and a method for gas suction which allows to overcome the problems of the prior art.

According to the present invention, said object is achieved by a foaming mould and by a method for producing foamed articles having the characteristics set out in the claims.

The characteristics and the advantages of the present invention shall become readily apparent in the detailed description that follows, provided purely by way of non limiting example, in which:
- Figure 1 is a schematic section view showing a gas suction system for a foaming mould according to the present invention,
- Figure 2 is a partial section view in enlarged scale of the part designated by the arrow II in Figure 1,
- Figure 3 is a schematic section view showing the gas suction step,
- Figure 4 shows the foaming mould in fully open position,

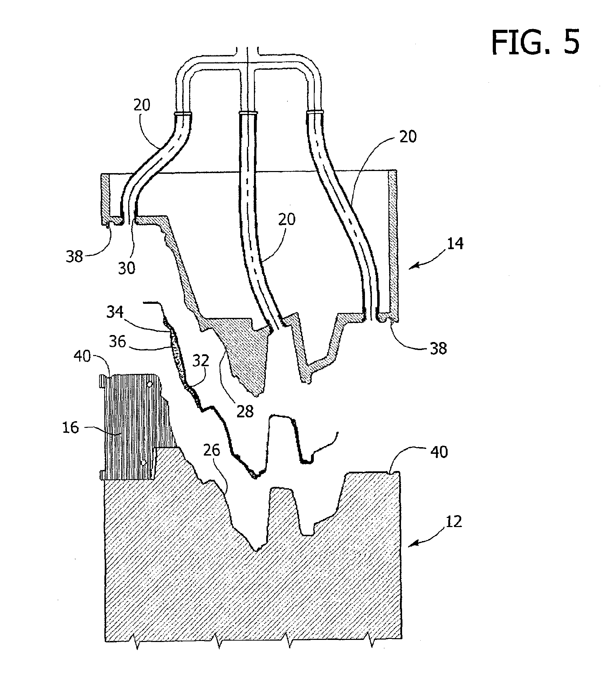

- Figure 5 schematically shows the step of extracting the foamed article, and
- Figures 6, 7 and 8 are enlarged scale details of the part designated by the arrow VI in Figure 2, respectively in the condition with the mould fully closed, partially open and fully open.

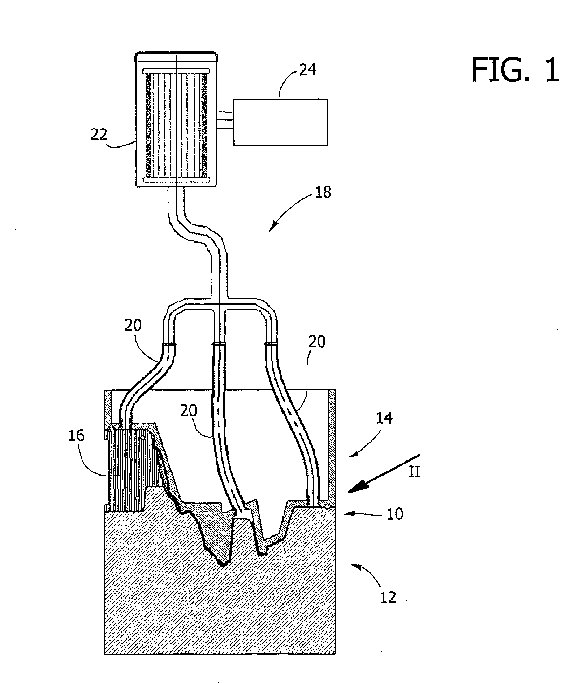

With reference to Figure 1, the number 10 designates a foaming mould for producing foamed articles in particular, but not exclusively, for vehicle interior fittings. The mould 10 comprises a fixed lower half-mould 12 and a movable upper half-mould 14. The lower half-mould 12 is usually called "die" and the upper half-mould 14 is called "punch". The upper half-mould 14 is movable relative to the lower half-mould 12 along a vertical direction of opening/closing. The lower half-mould 12 can be provided with a carriage 16 movable horizontally to facilitate the extraction of the finished article.

The foaming mould 10 is associated to a suction system 18 which comprises at least one suction conduit arranged to aspirate the gases which are developed during the foaming reaction directly inside the mould 10. In the example schematically shown in the figure, the suction system 18 comprises three suction conduits 20 connected to suction holes formed in the upper half-mould 14. The suction system 18 comprises a filter 22 connected to the suction conduits 20 and a suction pump schematically designated by the reference number 24.

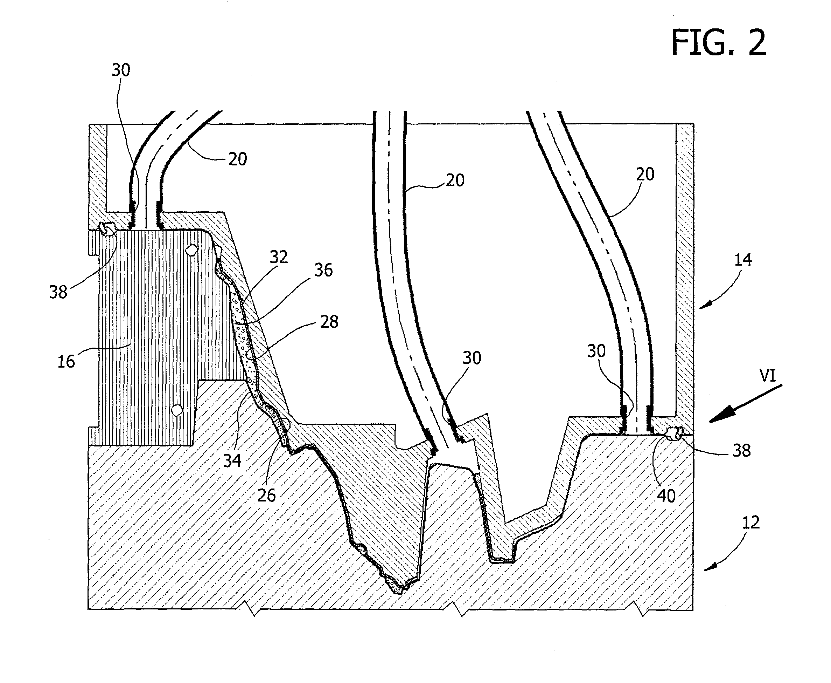

With reference to Figure 2, the half-moulds 12, 14 are provided with respective active surfaces designated by the references 26, 28. The active surface 26 of the lower mould 12 partly extends on the movable carriage 16. In the upper half-mould 14 are formed holes for the suction of the reaction gases, which end on the active surface 28. In correspondence with said holes are positioned tubular bushings 30 connected to the suction conduits 20.

In operation, a support element 32 made of rigid plastic material is positioned against the active surface 28 of the upper half-mould 14 and a coating layer 34 is applied on the active surface 26 of the lower half-mould 12. Subsequently, the mould is brought to the closed position shown in Figure 2. In this position, empty chambers with variable thickness are formed between the coating layer and the rigid support element 32. Said chamber constitute foaming regions to be filled by a foaming material, e.g. polyurethane.

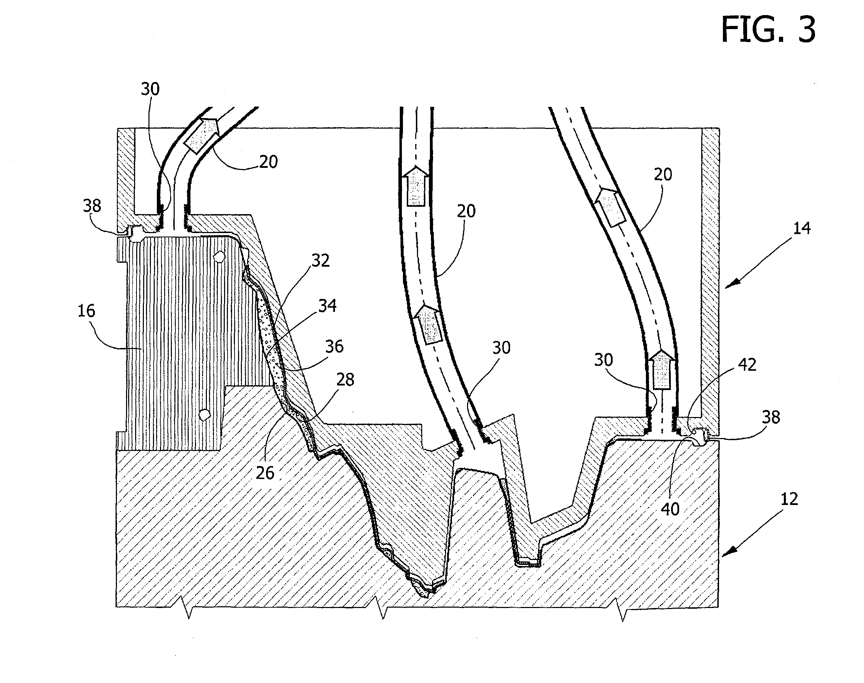

While the mould is in closed position, a mixture of foamable plastic material is injected between the two half-moulds through an injection channel (not shown). The foamable material fills the foaming chambers defined by the empty spaces between the coating layer 34 and the rigid support element 32. Figures 2 and 3 show a layer 36 of foamed material which fills the free spaces between the coating 34 and the rigid support element 32.

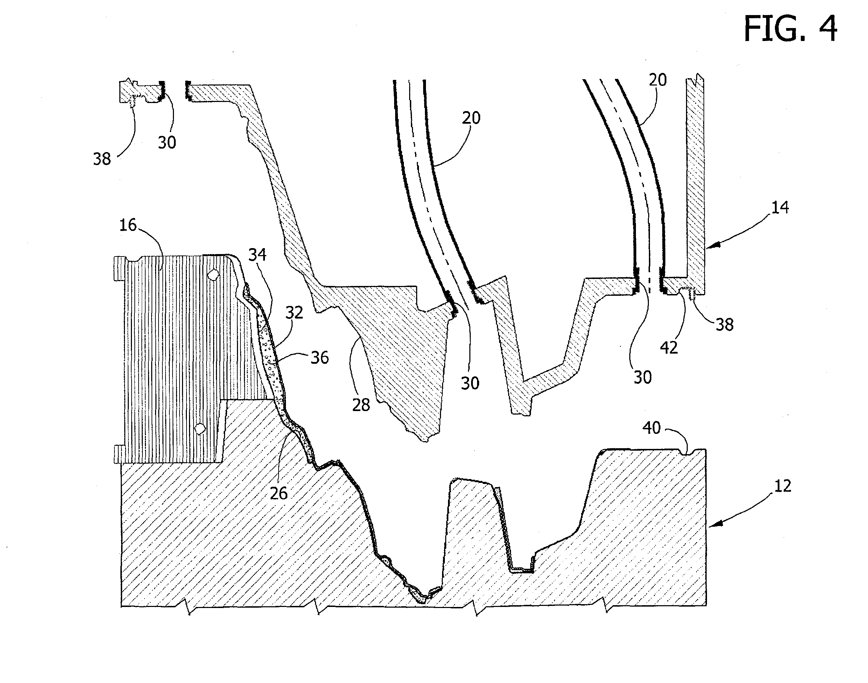

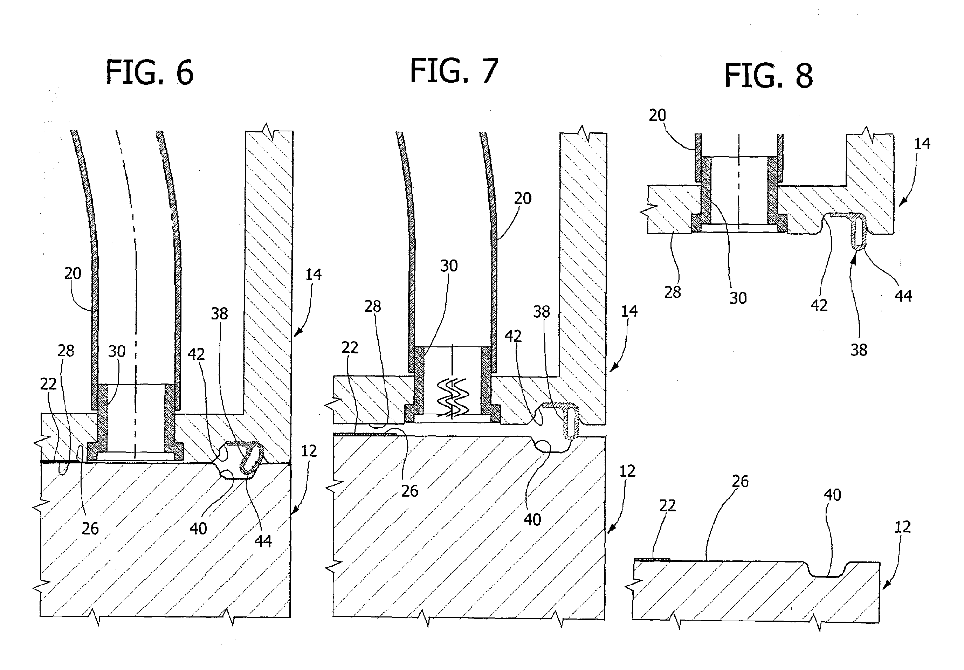

With reference to Figures 2 through 4 and to the details of Figures 6 through 8, between the two half-moulds 12, 14 is positioned a peripheral sealing gasket 38 which extends on a closed path and establishes a peripheral seal on the mutual contact surfaces between the half-moulds 12, 14 outside the active surfaces 26, 28.

With reference to Figures 6, 7 and 8, the half-moulds 12, 14 are provided on the peripheral surfaces of mutual contact with two grooves 40, 42 facing each other which extend along a closed path on the respective peripheral surfaces of mutual contact between the two half-moulds 12, 14. The gasket 38 is fastened in the groove 42 of the upper half-mould 14 and it has a deformable projecting portion 44 which comes in sealing contact with an edge of the groove 40 of the lower half-mould 12. Naturally, the gasket 38 could be fastened to the lower half-mould 12 instead of to the half-mould 14 and multiple sealing gaskets, mutually in parallel, could also be provided. Fastening the gasket to the upper half-mould reduces the risk of damaging the gasket.

Figures 6, 7 and 8 respectively show the half-moulds 12, 14 in a fully closed position, in a partially open position and in fully open position.

In the fully closed position, the deformable projecting portion 44 of the gasket 38 bends and enters the groove 40 of the lower half-mould 12.

In the partially open position of the half-moulds 12, 14, the gasket 38 establishes a peripheral sealing contact between the half-moulds 12, 14. For example, the gasket 38 can achieve the sealing contact with the lower half-mould 12 on a rounded edge of the groove 40.

In the fully open position, the gasket 38 is separated from the lower half-mould 12. The grooves 40, 42 have such shape and dimensions as to contain the gasket 38 preventing it from being pinched between the mutual contact surfaces of the half-moulds during their closure.

In the closed and partially open position of the two half-moulds 12, 14 shown respectively in Figures 2, 6 and 3, 7, the gasket 38 closes in sealed fashion towards the exterior of the mould the volume between the active surfaces 26, 28. In the partially open position shown in Figures 3 and 7, the half-moulds 12, 14 are slightly open relative to the fully closed configuration in which foaming takes place. In the partially open position, the volume between the active surfaces 26, 28 is greater than the volume defined between said surfaces in the injection and foaming position. The gases which are formed during the foaming reaction can then expand in the volume existing between the active surfaces 26, 28 without, however, escaping outside the mould.

In the partially open position, the suction pump of the suction system 18 is activated and creates a vacuum in the suction conduits 20. The reaction gases are thus evacuated in the suction channels 20. The gasket 38 prevents the escape of gas but allows the entrance of air from the exterior when a vacuum is formed in the space defined between the half-moulds. This assures that all the gas present between the half-moulds is aspirated.

The partially open position is defined according to the characteristics of the gasket 38. The two half-moulds 12, 14 in the partially open position are moved away from each other by a distance not exceeding the distance that allows the gasket 38 to establish an effective sealing contact between the moulds 12, 14 also taking into account the dimensional tolerances.

The fact of partially opening the half-moulds to aspirate the reaction gases is an essential characteristic of the system according to the present invention. The foaming reaction takes place in a space defined between the coating 34 and the support element 32. The partial opening of the half-moulds has the purpose of allowing the reaction gases to escape from the space defined between the coating 34 and the rigid support element 32 and to reach the aspiration channels 20. In the absence of the partial opening of the half-moulds 12, 14, the aspiration of the gases would require a considerably longer time and in any case after the opening of the half-moulds a substantial volume of gas still trapped in the component would be released to the work environment.

The solution according to the present invention creates an expansion volume for the collection of the reaction gases which is isolated in sealed fashion relative to the work environment. This allows to obtain a very rapid evacuation of the reaction gases, minimising the risk of diffusion of harmful gases into the work environment.

## Claims

1. A foaming mould (10) for producing foamed articles, comprising:
- a first and a second half-mould (12, 14) movable towards each other along a direction of opening/closing and provided with respective active surfaces (26, 28) defining at least one foaming region (36),
- at least one conduit (20) for the suction of reaction gases formed in said foaming region (36),
**characterised in that** it comprises at least one sealing gasket (38) which, in a partially open position of the half-moulds (12, 14), forms a volume for the expansion of the reaction gases communicating with said suction conduit (20) and in gas tight fashion towards the exterior of the mould.

2. Foaming mould as claimed in claim 1,
**characterised in that** the sealing gasket (38) extends along a closed path on peripheral surfaces of mutual contact between the half-moulds (12, 14).

3. Foaming mould as claimed in claim 1,
**characterised in that** the half-moulds (12, 14) are provided with respective grooves (40, 42) the sealing gasket (38) being fastened in one of said grooves (42) and having a deformable projecting portion (44) which extends in the other groove (44) in the fully closed position of the two half-moulds (12, 14).

4. A method for the suction of reaction gases in a foaming mould comprising a first and a second half-mould (12, 14), movable relative to each other along a direction of opening/closing, and provided with respective active surfaces (26, 28),
**characterised in that** it comprises the steps of:
closing in sealed fashion towards the exterior of the mould the volume defined between the sealing surfaces (26, 28),
partially open the half-moulds (12, 14) in such a way as to increase the volume defined between the active surfaces (26, 28) maintaining said volume closed in sealed fashion towards the exterior, and
connecting to a source of vacuum the volume defined between the active surfaces (26, 28).

5. Method as claimed in claim 4, **characterised in that** the sealed closure of the volume defined between the active surfaces (26, 28) is obtained by means of a peripheral gasket (38) which extends along a closed path on the peripheral surfaces of mutual contact between the half-moulds (12, 14).
